# EUROPÄISCHE PATENTANMELDUNG

(11) **EP 4 616 997 A2**
(43) Veröffentlichungstag der Anmeldung: **17.09.2025**
(21) Anmeldenummer: 25193758.7
(22) Anmeldetag: 21.03.2016
(51) Int. Cl.: B24B 21/16

(54) **SCHLEIFMASCHINE ZUM BEARBEITEN EINER ANSTREIFKANTE EINER LAUFSCHAUFEL**

(30) Priorität: 27.03.2015 DE 102015205624
(62) Teilanmeldung aus: 16713349.5
(71) Anmelder: Siemens Energy Global GmbH & Co. KG, 81739 München (DE)
(72) Erfinder: Heiderich, Julian, 46147 Oberhausen (DE); Schäffer, Karsten, 46045 Oberhausen (DE); Sellmann, Stefan, 42549 Velbert (DE); Visajtaev, Marat, 46236 Bottrop (DE); Vogt, Felix, 46045 Oberhausen (DE)

(57) **Zusammenfassung**

Die Erfindung betrifft eine Schleifmaschine (1) zum Bearbeiten einer Anstreifkante (2) einer Laufschaufel (3), umfassend eine Schleifeinheit (4) mit einem angetriebenen Schleifwerkzeug (5), eine Werkstückaufnahmeeinrichtung (6), die zur Aufnahme einer zu schleifenden Laufschaufel (3) eingerichtet ist, und eine Werkstückantriebseinheit (7), die dazu ausgelegt ist, die Werkstückaufnahmeeinrichtung (6) mit einer daran aufgenommenen Laufschaufel (3) zwecks spanender Bearbeitung der Anstreifkante (2) relativ zum Schleifwerkzeug (5) zu bewegen, wobei die Werkstückantriebseinheit (5) eine Schwenkachse (28) aufweist, an der die Werkstückaufnahmeeinrichtung (6) derart gehalten ist, dass die Anstreifkante (2) einer an dieser aufgenommenen Laufschaufel (3) im Rahmen einer Schwenkbewegung der Werkstückaufnahmeeinrichtung (6) um die Schwenkachse (28) mit dem Schleifwerkzeug (5) in Eingriff gebracht wird. Ferner betrifft die Erfindung ein Verfahren zum Bearbeiten einer Anstreifkante (2) einer Laufschaufel (3), insbesondere unter Verwendung einer erfindungsgemäßen Schleifmaschine (1).

## Beschreibung

Die vorliegende Erfindung betrifft eine Schleifmaschine zum Bearbeiten einer Anstreifkante einer Laufschaufel, umfassend eine Schleifeinheit mit einem angetriebenen Schleifwerkzeug, eine Werkstückaufnahmeeinrichtung, die zur Aufnahme einer zu schleifenden Laufschaufel eingerichtet ist, und eine Werkstückantriebseinheit, die dazu ausgelegt ist, die Werkstückaufnahmeeinrichtung mit einer daran aufgenommenen Laufschaufel zwecks spanender Bearbeitung der Anstreifkante relativ zum Schleifwerkzeug zu bewegen. Ferner betrifft die Erfindung ein Verfahren zum Bearbeiten einer Anstreifkante einer Laufschaufel, insbesondere unter Verwendung einer solchen Schleifmaschine.

Laufschaufeln, wie sie insbesondere in Gasturbinen eingesetzt werden, sind während des Betriebs extremen Bedingungen ausgesetzt, was mit einem hohen Verschleiß einhergeht, der insbesondere durch Oxidation hervorgerufen wird. Entsprechend ist es erforderlich, verschlissene Laufschaufeln regelmäßig im Rahmen einer Gasturbinenrevision gegen neue oder überholte Laufschaufeln auszutauschen. Die neu einzusetzenden Laufschaufeln müssen auf jeder Baustelle individuell an die vorhandene Gasturbine angepasst werden. Hierbei wird die Länge der Laufschaufel an der Anstreifkante reduziert, um den Abstand zwischen der Anstreifkante der Laufschaufel und dem Gasturbinengehäuse derart einzustellen, dass sich während des Betriebs der Gasturbine ein möglichst kleiner Spalt einstellt, um unerwünschte Spaltverluste zu minimieren.

Bei der Kürzung der Anstreifkanten von Laufschaufeln werden normalerweise Schleifmaschinen eingesetzt. Diese umfassen in der Regel eine ortsfeste Schleifeinheit mit angetriebenem Schleifwerkzeug, eine Werkstückaufnahmeeinrichtung, die zur Aufnahme einer zu schleifenden Laufschaufel eingerichtet ist, und eine Werkstückantriebseinheit, die dazu ausgelegt ist, die Werkstückaufnahmeeinrichtung mit einer daran aufgenommenen Laufschaufel zwecks spanender Bearbeitung der Anstreifkante relativ zum Schleifwerkzeug zu bewegen. Die Werkstückantriebseinheit und die zugehörige Steuerung solcher Schleifmaschinen sind derart ausgelegt, dass sie eine Kreisinterpolation ermöglichen, die erforderlich ist, um die komplexe Geometrie der Anstreifkante in Form eines Kegelmantelabschnittes fertigen zu können.

Ausgehend von diesem Stand der Technik ist es eine Aufgabe der vorliegenden Erfindung, eine alternative Schleifmaschine sowie ein alternatives Verfahren der eingangs genannten Art zum Bearbeiten einer Anstreifkante einer Laufschaufel zu schaffen.

Zur Lösung dieser Aufgabe schafft die vorliegende Erfindung eine Schleifmaschine der eingangs genannten Art, die dadurch gekennzeichnet ist, dass die Werkstückantriebseinheit eine Schwenkachse aufweist, an der die Werkstückaufnahmeeinrichtung derart gehalten ist, dass die Anstreifkante einer an dieser aufgenommenen Laufschaufel im Rahmen einer Schwenkbewegung der Werkstückaufnahmeeinrichtung um die Schwenkachse mit dem Schleifwerkzeug in Eingriff gebracht wird. Dank einer solchen Schwenkachse lassen sich die Anschleifkanten von Laufschaufeln ohne komplexe CNC-gesteuerte Kreisinterpolation bei einfachem Aufbau problemlos mit unterschiedlichsten Kegelmantelabschnittsformen versehen. Hierzu simuliert die erfindungsgemäße Schleifmaschine die tatsächliche Einbausituation einer Laufschaufel, wobei die Werkstückaufnahmeeinrichtung die Radscheibe, die Schwenkachse die Radscheibendrehachse und das Schleifwerkzeug das Gasturbinengehäuse repräsentiert.

Gemäß einer ersten Ausführungsform der vorliegenden Erfindung handelt es sich bei dem Schleifwerkzeug um einen im Wesentlichen zylindrisch ausgebildeten Schleifstein, der um seine Längsachse rotierend angetrieben wird. Bevorzugt wird jedoch gemäß einer zweiten Ausführungsform als Schleifwerkzeug ein angetriebenes Schleifband eingesetzt, das über eine Kontaktrolle sowie über zumindest eine Umlenkrolle geführt ist. Ein solcher Bandschleifer ist dahingehend von Vorteil, dass das Schleifband verhältnismäßig preiswert ist und sich schnell und problemlos austauschen lässt.

Gemäß einer Ausgestaltung der vorliegenden Erfindung ist eine Längsachse des Schleifsteins oder eine Längsachse der Kontaktrolle zumindest in einer Längsachsengrundstellung parallel zur Schwenkachse der Werkstückantriebseinheit angeordnet. In einer solchen Längsachsengrundstellung lassen sich Anstreifkanten mit in axialer Richtung konstantem Außendurchmesser fertigen.

Vorteilhaft ist eine Verschwenkeinrichtung vorgesehen, an der die Schleifeinheit zum Anstellen der Längsachse des Schleifsteins oder der Längsachse der Kontaktrolle in Bezug auf eine Längsachsengrundstellung verschwenkbar aufgenommen ist, wobei die Schwenkachse der Werkstückantriebseinheit und die Schwenkachse der Verschwenkeinheit bevorzugt senkrecht zueinander angeordnet sind. Dank einer solchen Verschwenkeinrichtung können auch Anstreifkanten mit in axialer Richtung konisch ausgebildetem Außendurchmesser hergestellt werden.

Ebenso ist eine sich vertikal erstreckende Linearführung vorgesehen, entlang der die Schleifeinheit auf- und abwärts bewegbar ist. Entsprechend wird bei dieser Ausgestaltung der erfindungsgemäßen Schleifmaschine die Zustellbewegung über eine Bewegung der Schleifeinheit entlang der Linearführung realisiert.

Vorteilhaft ist im Bereich der Schleifeinheit ein Absaugkopf einer Absaugeinheit angeordnet, um während der Schleifbearbeitung anfallenden Schleifstaub zu entfernen.

Gemäß einer Ausführungsform der vorliegenden Erfindung ist die Schwenkachse der Werkstückantriebseinheit ortsfest gelagert. Auf diese Weise wird ein sehr einfacher Aufbau erzielt.

Vorteilhaft ist eine von außen zugängliche Maschinenkabine vorgesehen, in der die Schleifeinheit und die Werkstückaufnahmeeinrichtung angeordnet sind. Eine solche Maschinenkabine dient zum einen der Sicherheit des Bedienpersonals. Zum anderen verhindert sie die Verschmutzung der Umgebung durch anfallenden bzw. nicht abgesaugten Schleifstaub.

Vorteilhaft weist die Maschinenkabine eine Deckenplatte auf, an der die Werkstückantriebseinheit angeordnet ist. Auf diese Weise wird ein sehr einfacher und preiswert herzustellender Aufbau der Schleifmaschine erzielt.

Vorteilhaft ist die Schleifmaschine in ihrer Gesamtheit transportabel ausgebildet, so dass sie sich problemlos an jede Baustelle verbringen lässt, an der Revisionsarbeiten an Gasturbinen durchgeführt werden sollen. So kann die Schleifmaschine mit Ösen oder dergleichen versehen sein, die zur Befestigung von Krangurten dienen. Zusätzlich oder alternativ kann die Schleifmaschine auch eine Bodenplatte aufweisen, die derart ausgestaltet ist, dass sie von einer Staplergabel unterfasst werden kann.

Zur Lösung der eingangs genannten Aufgabe schafft die vorliegende Erfindung ferner ein Verfahren zum Bearbeiten einer Anstreifkante einer Laufschaufel, insbesondere unter Verwendung einer erfindungsgemäßen Schleifmaschine, bei dem die Anstreifkante einer Laufschaufel im Rahmen einer Schwenkbewegung der Laufschaufel um eine gegenständliche Schwenkachse mit einem Schleifwerkzeug in Eingriff gebracht wird.

Bevorzugt wird bei dem erfindungsgemäßen Verfahren die Anstreifkante im Rahmen der Schwenkbewegung derart mit dem Schleifwerkzeug in Eingriff gebracht, dass die Anstreifkante die Form eines Kegelmantelabschnitts erhält.

Weitere Merkmale und Vorteile der vorliegenden Erfindung werden anhand der nachfolgenden Beschreibung einer Schleifmaschine gemäß einer Ausführungsformen der vorliegenden Erfindung unter Bezugnahme auf die beiliegende Zeichnung deutlich.

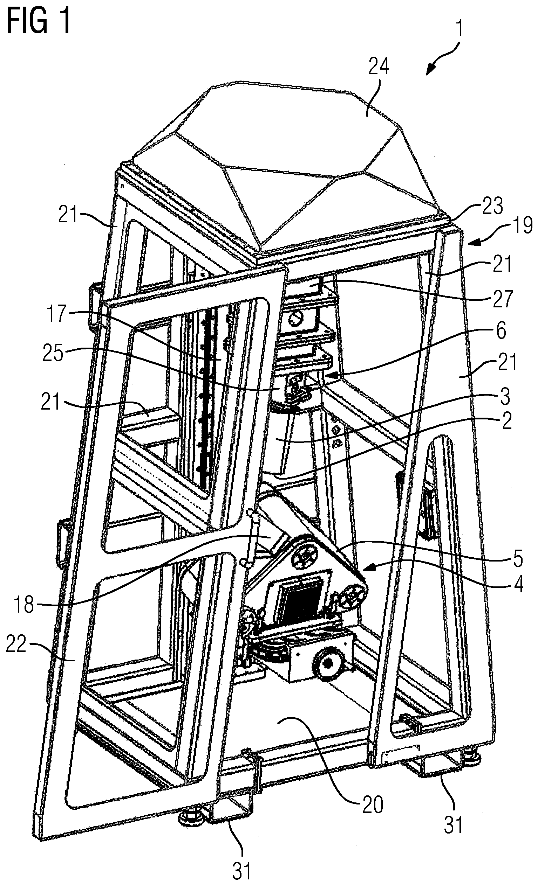

Darin ist
- Figur 1: eine perspektivische Ansicht einer Schleifmaschine gemäß einer Ausführungsform der vorliegenden Erfindung;
- Figur 2: eine Vorderansicht der in Figur 1 dargestellten Schleifmaschine;

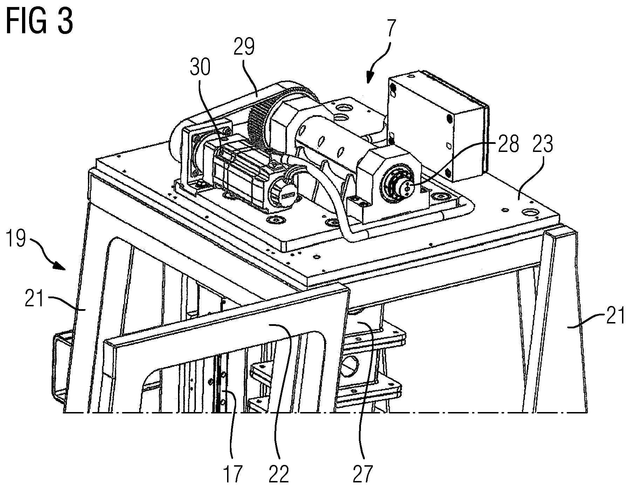

- Figur 3: eine perspektivische Draufsicht des oberen Teils der in Figur 1 dargestellten Schleifmaschine, die eine Werkstückantriebseinheit zeigt;

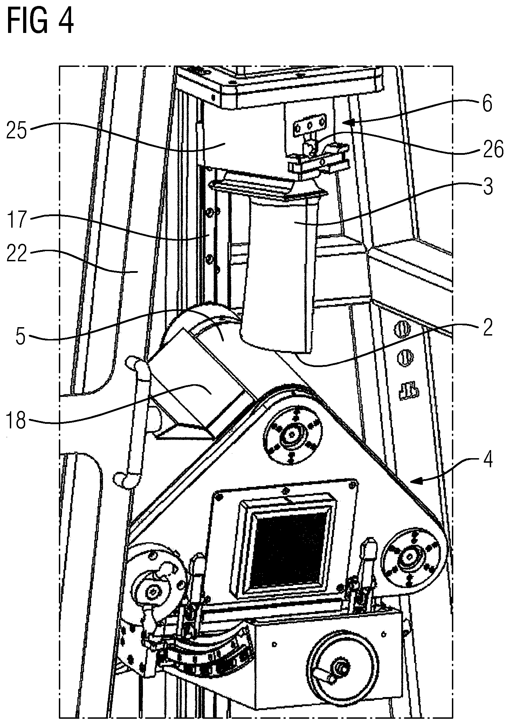

- Figur 4: eine vergrößerte Ansicht einer Schleifeinheit und einer Werkstückaufnahmeeinrichtung der in Figur 1 dargestellten Schleifmaschine; und

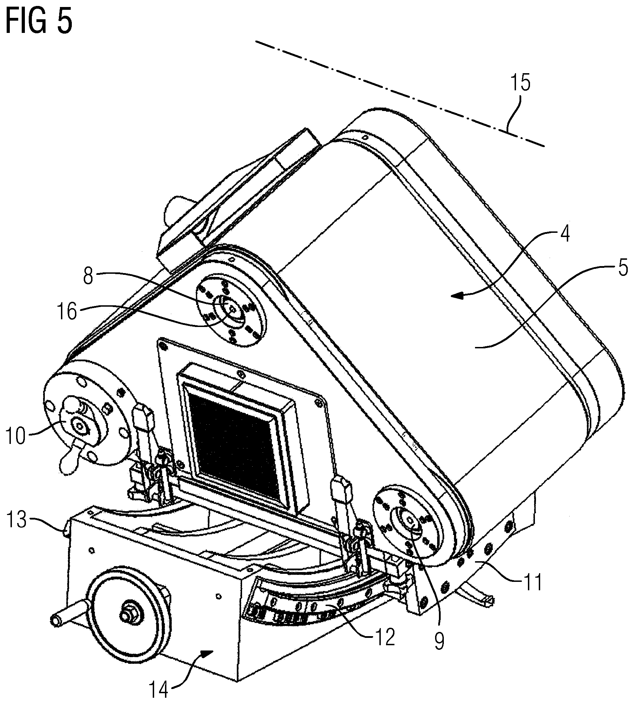

- Figur 5: eine perspektivische Ansicht der in Figur 4 dargestellten und auf einer Verschwenkeinrichtung angeordneten Schleifeinheit.

Die Figuren zeigen eine Schleifmaschine 1 gemäß einer Ausführungsform der vorliegenden Erfindung, die zum Bearbeiten einer Anstreifkante 2 einer Laufschaufel 3 dient.

Die Schleifmaschine 1 umfasst als Hauptkomponenten eine Schleifeinheit 4 mit einem angetriebenen Schleifwerkzeug 5, eine Werkstückaufnahmeeinrichtung 6, die zur Aufnahme einer zu schleifenden Laufschaufel 3 eingerichtet ist, und eine Werkstückantriebseinheit 7, die dazu ausgelegt ist, die Werkstückaufnahmeeinrichtung 6 mit einer daran aufgenommenen Laufschaufel 3 zwecks spanender Bearbeitung der Anstreifkante 2 der Laufschaufel 3 relativ zum Schleifwerkzeug 5 zu bewegen.

Die Schleifeinheit 4 ist als Bandschleifer ausgebildet. Sie umfasst als Schleifwerkzeug 5 ein Schleifband, das über eine Kontaktrolle 8 sowie über zwei Umlenkrollen 9 und 10 geführt und über einen nicht näher dargestellten Antrieb in bekannter Weise antreibbar ist. Ein Schlitten 11 der Schleifeinheit 4 ist bewegbar sowie arretierbar an parallel zueinander angeordneten und kreisringsegmentförmig ausgebildeten Führungsschienen 12 und 13 einer Verschwenkeinrichtung 14 aufgenommen, so dass sich die Schleifeinheit 4 in ihrer Gesamtheit um eine Schwenkachse 15 verschwenken lässt. Entsprechend kann eine Längsachse 16 der Kontaktrolle 8 ausgehend von einer Längsachsengrundstellung, in der sich die Längsachse 16 horizontal erstreckt, im Rahmen einer Schwenkbewegung um die Schwenkachse 15 nach Bedarf angestellt werden. Die Verschwenkeinrichtung 14 ist an einer sich vertikal erstreckenden Linearführung 17 auf- und abwärts bewegbar und in beliebigen Positionen arretierbar gehalten. Damit lässt sich die Schleifeinheit 4 in beliebigen Schwenkstellungen auf- und abwärts bewegen. Im Bereich der Kontaktrolle 8 ist ein Absaugkopf 18 einer nicht näher dargestellten Absaugeinheit angeordnet, wobei die Breite des Absaugkopfes 18 im Wesentlichen der Breite des Schleifwerkzeugs 5 entspricht.

Die Schleifeinheit 4, die Verschwenkeinrichtung 14 und die Linearführung 17 sind in einer Maschinenkabine 19 angeordnet. Diese umfasst einen Kabinenboden 20, Seitenwände 21, eine Zugangstür 22, eine Deckenplatte 23 sowie ein Kabinendach 24, das zum Abdecken der Deckenplatte 24 lösbar an dieser befestigt ist. Oberhalb der Schleifeinheit 4 ist innerhalb der Maschinenkabine 19 die Werkstückaufnahmeeinrichtung 6 positioniert. Die Werkstückaufnahmeeinrichtung 6 umfasst eine Spanneinrichtung 25, die zur Aufnahme und zum Spannen eines Schaufelfußes 26 der Laufschaufel 3 ausgelegt ist. Die Spanneinrichtung 25 ist über ein Zwischenstück 27, das sich durch eine Öffnung der Deckenplatte 24 erstreckt, fest mit einer Schwenkachse 28 der Werkstückantriebseinheit 7 verbunden, die an der Außenseite der Deckenplatte 23 der Maschinenkabine 19 angeordnet und gelagert ist. Die Schwenkachse 28 der Werkstückantriebseinheit 7 erstreckt sich parallel zu der Längsachse 16 der Kontaktrolle 8, wenn sich diese in ihrer Längsachsengrundstellung befindet, und senkrecht zur Schwenkachse 15 der Verschwenkeinrichtung 14. Die Schwenkachse 28 ist über einen Zahnriemen 29 mit einem Antrieb 30 verbunden, der ebenfalls an der Außenseite der Deckenplatte 23 befestigt ist, so dass sich die Spanneinrichtung 25 mit einer daran gehaltenen Laufschaufel 3 über den Antrieb 30 schwenkend um die Schwenkachse 28 relativ zur Kontaktrolle 8 der Schleifeinheit 4 hin und her bewegen lässt.

Die Schleifmaschine 1 ist in ihrer Gesamtheit transportabel ausgebildet. Hierzu können an der Deckenplatte 24 der Maschinenkabine 19 nicht näher dargestellte Ösen eingeschraubt werden, die zur Befestigung von Krangurten dienen, so dass sich die Schleifmaschine 1 unter Verwendung eines Krans anheben lässt. Ferner sind am Kabinenboden 20 Metallrohre 31 mit rechteckigem Querschnitt befestigt, deren Größen und Abstände derart gewählt sind, dass in diese eine Staplergabel eines Gabelstaplers eingeführt werden kann. Entsprechend lässt sich die Schleifmaschine 1 auch mittels eines Gabelstaplers aufnehmen und transportieren.

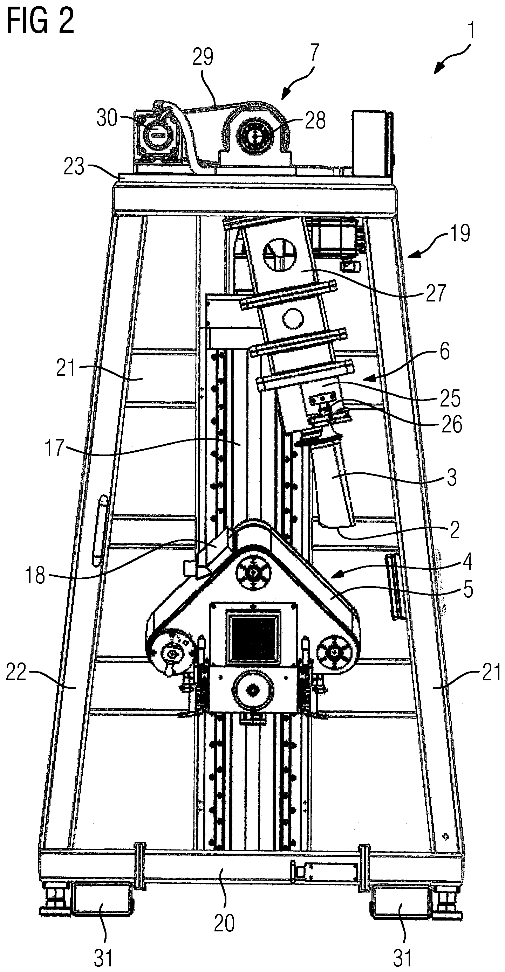

Zur Bearbeitung einer Anstreifkante 2 einer Laufschaufel 3 wird die Laufschaufel 3 in einem ersten Schritt in der Spanneinrichtung 25 der Werkstückaufnahmeeinrichtung 6 montiert. Anschließend wird eine gewünschte Anstellung der Kontaktrolle 8 der Schleifeinheit 4 eingestellt, indem die Schleifeinheit 4 um die Schwenkachse 15 der Verschwenkeinrichtung 14 verschwenkt wird. In einem weiteren Schritt wird die Spanneinrichtung 25 mit der daran gehaltenen Laufschaufeln 3 aus der vertikalen Position verschwenkt, wie es in Figur 2 dargestellt ist. Anschließend wird die Schleifeinheit 4 entlang der Linearführung 17 vertikal verfahren, um auf diese Weise die gewünschte Zustellung einzustellen. Nunmehr wird das Schleifwerkzeug 5 der Schleifeinheit 4 angetrieben, woraufhin die Spanneinrichtung 19 mit der daran gehaltenen Laufschaufel 3 unter Verwendung des Antriebs 30 um die Schwenkachse 28 der Werkstückantriebseinheit 7 verschwenkt wird. Im Rahmen dieser Schwenkbewegung wird die Anstreifkante 2 der Laufschaufel 3 über das Schleifwerkzeug 5 geführt, so dass ein Materialabtrag stattfindet. Im Rahmen dieses Materialabtrags erhält die Anstreifkante 2 die Form eines Kegelmantelabschnittes. Die während der spanenden Bearbeitung anfallenden Späne werden über den Absaugkopf 18 abgesaugt.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen. So kann anstelle eines Schleifbandes ein zylindrisch ausgebildeter Schleifstein als Schleifwerkzeug verwendet werden, um nur ein Beispiel zu nennen.

## Patentansprüche

1. Schleifmaschine (1) zum Bearbeiten einer Anstreifkante (2) einer Laufschaufel (3), umfassend
- eine Schleifeinheit (4) mit einem angetriebenen Schleifwerkzeug (5),
- eine Werkstückaufnahmeeinrichtung (6), die zur Aufnahme einer zu schleifenden Laufschaufel (3) eingerichtet ist, und
- eine Werkstückantriebseinheit (7), die dazu ausgelegt ist, die Werkstückaufnahmeeinrichtung (6) mit einer daran aufgenommenen Laufschaufel (3) zwecks spanender Bearbeitung der Anstreifkante (2) relativ zum Schleifwerkzeug (5) zu bewegen,
**dadurch gekennzeichnet, dass**
die Werkstückantriebseinheit (5) eine Schwenkachse (28) aufweist, an der die Werkstückaufnahmeeinrichtung (6) derart gehalten ist, dass die Anstreifkante (2) einer an dieser aufgenommenen Laufschaufel (3) im Rahmen einer Schwenkbewegung der Werkstückaufnahmeeinrichtung (6) um die Schwenkachse (28) mit dem Schleifwerkzeug (5) in Eingriff gebracht wird,
wobei eine sich vertikal erstreckende Linearführung (17) vorgesehen ist,
entlang der die Schleifeinheit (4) auf- und abwärts bewegbar ist.

2. Schleifmaschine (1) nach Anspruch 1,
**dadurch gekennzeichnet, dass**
es sich bei dem Schleifwerkzeug (5) um einen im Wesentlichen zylindrisch ausgebildeten Schleifstein oder um ein angetriebenes Schleifband handelt, das über eine Kontaktrolle (8) sowie über zumindest eine Umlenkrolle (9, 10) geführt ist.

3. Schleifmaschine (1) nach Anspruch 2,
**dadurch gekennzeichnet, dass**
eine Längsachse des Schleifsteins oder eine Längsachse (16) der Kontaktrolle (8) zumindest in einer Längsachsengrundstellung parallel zur Schwenkachse (28) der Werkstückantriebseinheit (7) angeordnet ist.

4. Schleifmaschine (1) nach Anspruch 2 oder 3,
**dadurch gekennzeichnet, dass**
eine Verschwenkeinrichtung (14) vorgesehen ist, an der die Schleifeinheit (4) zum Anstellen der Längsachse des Schleifsteins oder der Längsachse (16) der Kontaktrolle (8) in Bezug auf eine Längsachsengrundstellung verschwenkbar aufgenommen ist,
wobei die Schwenkachse (28) der Werkstückantriebseinheit (7) und die Schwenkachse (15) der Verschwenkeinrichtung (14) bevorzugt senkrecht zueinander angeordnet sind.

5. Schleifmaschine (1) nach einem der vorhergehenden Ansprüche,
**dadurch gekennzeichnet, dass**
im Bereich der Schleifeinheit (4) ein Absaugkopf (18) einer Absaugeinheit angeordnet ist.

6. Schleifmaschine (1) nach einem der vorhergehenden Ansprüche,
**dadurch gekennzeichnet, dass**
die Schwenkachse (28) der Werkstückantriebseinheit (7) ortsfest gelagert ist.

7. Schleifmaschine (1) nach einem der vorhergehenden Ansprüche,
**dadurch gekennzeichnet, dass**
eine von außen zugängliche Maschinenkabine (19) vorgesehen ist, in der die Schleifeinheit (4) und die Werkstückaufnahmeeinrichtung (6) angeordnet sind.

8. Schleifmaschine (1) nach Anspruch 7,
**dadurch gekennzeichnet, dass**
die Maschinenkabine (19) eine Deckenplatte (23) aufweist, an der die Werkstückantriebseinheit (7) angeordnet ist.

9. Schleifmaschine (1) nach einem der vorhergehenden Ansprüche,
**dadurch gekennzeichnet, dass**
diese in ihrer Gesamtheit transportabel ausgebildet ist.

10. Verfahren zum Bearbeiten einer Anstreifkante (2) einer Laufschaufel (3),
insbesondere unter Verwendung einer Schleifmaschine (1) nach einem der vorhergehenden Ansprüche,
bei dem die Anstreifkante (2) einer Laufschaufel (3) im Rahmen einer Schwenkbewegung der Laufschaufel (3) um eine gegenständliche Schwenkachse (28) mit einem Schleifwerkzeug (5) in Eingriff gebracht wird.

11. Verfahren nach Anspruch 10,
**dadurch gekennzeichnet, dass**
die Anstreifkante (2) im Rahmen der Schwenkbewegung derart mit dem Schleifwerkzeug (4) in Eingriff gebracht wird, dass die Anstreifkante (2) die Form eines Kegelmantelabschnitts erhält.
